# EUROPÄISCHE PATENTSCHRIFT

(11) **EP 1 474 538 B1**
(45) Veröffentlichungstag und Bekanntmachung des Hinweises auf die Patenterteilung: **15.11.2006**
(21) Anmeldenummer: 03709605.4
(22) Anmeldetag: 11.02.2003
(51) Int. Cl.: C22C 38/00

(54) **VERWENDUNG EINER STAHLLEGIERUNG ALS WERKSTOFF FÜR ROHRE ZUR HERSTELLUNG VON DRUCKGASBEHÄLTERN ODER ALS WERKSTOFF ZUR HERSTELLUNG VON FORMBAUTEILEN IM STRAHLLEICHTBAU**
USE OF A STEEL ALLOY AS A MATERIAL FOR PIPES FOR PRODUCING GAS CYLINDERS, OR AS A MATERIAL FOR PRODUCING MOULDED ELEMENTS IN LIGHT-GAUGE STEEL CONSTRUCTION
UTILISATION D'ALLIAGE D'ACIER COMME MATERIAU POUR DES TUYAUX POUR PRODUIRE DES RECIPIENTS ETANCHES AUX GAZ OU COMME MATERIAU POUR PRODUIRE DES ELEMENTS MOULES DANS LE DOMAINE DE LA CONSTRUCTION LEGERE EN ACIER

(30) Priorität: 15.02.2002 DE 10206612; 15.05.2002 DE 10221487; 15.05.2002 DE 10221486
(43) Veröffentlichungstag der Anmeldung: 10.11.2004
(73) Patentinhaber: Benteler Automobiltechnik GmbH, 33104 Paderborn (DE); BENTELER STAHL/ROHR GMBH, 33104 Paderborn (DE)
(72) Erfinder: BEER, Gerhard, 33104 Paderborn (DE); HARTMANN, Rainer, 33102 Paderborn (DE); MARKS, Franz, 33129 Delbrück (DE); GRUNDMEIER, Georg, 58239 Schwerte (DE); SÄUBERLICH, Thomas, 33330 Gütersloch (DE)
(74) Vertreter: Griepenstroh, Jörg
(86) Internationale Anmeldenummer: PCT/DE2003/000394
(87) Internationale Veröffentlichungsnummer: WO 2003/069005

(56) Entgegenhaltungen:
- US-A- 4 008 103
- PATENT ABSTRACTS OF JAPAN vol. 018, no. 578 (C-1269), 7. November 1994 (1994-11-07) & JP 06 212349 A (SUMITOMO METAL IND LTD), 2. August 1994 (1994-08-02)
- PATENT ABSTRACTS OF JAPAN vol. 2000, no. 08, 6. Oktober 2000 (2000-10-06) & JP 2000 144310 A (NIPPON STEEL CORP), 26. Mai 2000 (2000-05-26)

## Beschreibung

Die Erfindung betrifft die Verwendung einer Stahllegierung als Werkstoff für Rohre zur Herstellung von Druckgasbehältem oder als Werkstoff zur Herstellung von Formbauteilen im Stahlleichtbau.

Druckgasbehälter werden in der Regel aus einem Kohlenstoffstahl, wie z.B. St 52-3 oder STE 460, im normal geglühten Zustand hergestellt Besteht neben der Anforderung Druckhöhe auch die Forderung Gewicht einzusparen, werden flüssigkeits härtbare Vergütungsstähle wie SAE 1513 eingesetzt.

Im Zuge der Fertigung von Druckgasbehältem werden üblicherweise Rohrabschnitte warm umgeformt, wobei die Hälse der Druckgasbehälter und deren Böden ausgebildet werden. Die Bodenzentren werden anschließend verschlossen.

Zum Stand der Technik zählt es darüber hinaus, Druckgasbehälter mit angeschweißten Böden auszuführen.

Unabhängig von ihrer Herstellung werden die Druckgasbehälter anschließend öl- oder wasservergütet, dann sandgestrahlt und schließlich einer Druckprüfung unterzogen.

Die vorstehend beschriebenen Verfahrensweisen haben zur Folge, dass sowohl beim Öl- als auch beim Wasservergüten die Innenräume der Druckgasbehälter verzundem. Folglich muss der Zunder in einem vergleichsweise aufwändigen Arbeitsgang durch Sandstrahlen entfernt werden. Ferner ist auf die gesundheitsschädigenden Auswirkungen einer Ölabkühlung hinzuweisen. Des Weiteren ist beim Flüssigkeitshärten wegen der geometrischen Form der Druckgasbehälter (Hohlkörper) mit einer relativ großen Streuung der Härtewerte zu rechnen.

Aus der DE 195 33 229 C1 ist die Verwendung einer Stahllegierung als Werkstoff für unter Schutzgas luftvergütete Druckbehälter bekannt.

Bei dieser Stahllegierung, die insbesondere das teure Legierungselement Nickel enthält, kann eine Luftvergütung erst nach der Herstellung der Druckbehälter erfolgen. Dazu ist es erforderlich, dass die Druckbehälter nach der Lufthärtung in einem zusätzlichen Arbeitsgang angelassen werden, um die erforderliche Zähigkeit zu erreichen. Dieser Anlassvorgang ist mit einer Verrußung der Oberfläche verbunden und steht der Forderung nach einer sauberen Oberfläche entgegen.

Von erheblichem Nachteil ist ferner, dass infolge des hohen Kohlenstoffgehalts dieser Werkstoff nicht für die bei der Herstellung von Druckbehältern zur Erhöhung der Wirtschaftlichkeit geforderten schnellen Schweißverfahren, wie Metall-Aktivschweißen mit Mischgas (MAG) oder Laserstrahlschweißen geeignet ist, da die Gefahr der Rissbildung besteht.

Zum Stand der Technik zählt darüberhinaus ein wasservergütbarer Feinkornstahl mit einer Zugfestigkeit Rm von 1400 N/mm², einer Streckgrenze Rp0,2 von 1100 N/mm² und einer Dehnung A5 von 8 %. Ein derartiger Feinkornstahl wird häufig im Stahlleichtbau, insbesondere im Fahrzeugbau, zur Herstellung von Formbauteilen eingesetzt. Problematisch an diesem Stahlwerkstoff ist, dass er nur mit Wasser oder im Werkzeug vergütet werden kann. Dies ist generell aufwändig. Ohne Vergütung weist dieser Stahlwerkstoff jedoch keine ausreichende Festigkeit auf. Mit Vergütung ergibt sich aber die Problematik durch Zunder. Dieser kann nur durch einen vergleichsweise langen Beizprozess beseitigt werden. Ein Beizprozess führt wiederum zu Wasserstoffversprödung. Ferner ist ein starker Festigkeitsverlust in den durch Schweißnähte gebildeten Wärmeeinflusszonen festzustellen, wenn vergütete Formbauteile miteinander durch Schweißen gefügt werden. Zwar ist auch eine komplette Vergütung eines aus mehreren Einzelteilen bestehenden Formbauteils denkbar. Dann ergeben sich aber Schwierigkeiten im Hinblick auf den in der Regel nicht zu vermeidenden Verzug des kompletten Formbauteils. Schließlich ist bei dem bekannten Stahlwerkstoff noch zu beobachten, dass ein nicht unerheblicher Festigkeitsverlust durch eine Hochtemperaturverzinkung, wie eine Feuer-Verzinkung, eintritt. Eine solche Verzinkung wird jedoch gerade bei den Formbauteilen im Fahrzeugbau im Hinblick auf einen Korrosionsschutz mit geringer Schichtdicke angestrebt.

Bei einem Dualphasenstahl mit einer Zugfestigkeit Rm von 600 N/mm², einer Streckgrenze Rp0,2 von 400 N/mm² und einer Dehnung A5 von 20 % ist die Grundfestigkeit zu niedrig. Festigkeitserhöhungen sind zwar durch höhere Umformgrade zu erreichen, die jedoch bei einer Reihe von Formbauteilen, insbesondere im Fahrzeugbau, nicht beabsichtigt sind. Auch bei diesem Stahlwerkstoff sind bei einer Hochtemperaturverzinkung erhebliche Gefügeveränderungen nicht zu vermeiden.

Bei dem als TRIP-Stahl bekannten Stahlwerkstoff (Mehrphasenstahl) mit einer Zugfestigkeit Rm von 700 N/mm², einer Streckgrenze Rp0,2 von 480 N/mm² und einer Dehnung A5 von 24 % ist ebenfalls die Grundfestigkeit zu niedrig. Wie auch beim Dualphasenstahl ist eine Festigkeitserhöhung durch höhere Umformgrade zu erreichen, die jedoch bei diversen Formbauteilen, insbesondere im Fahrzeugbau, nicht erwünscht ist. Gefügeveränderungen in erheblichem Umfang sind ebenfalls bei einer Hochtemperaturverzinkung zu erwarten. Im übrigen ist bei diesem Stahlwerkstoff der Festigkeitsverlauf in Schweißnähten und in Wärmeeinflusszonen zu kritisch.

Schließlich zählt es zum Stand der Technik, Edelstahl mit einer Zugfestigkeit Rm von 800 N/mm², einer Streckgrenze Rp0,2 von 370 N/mm² und einer Dehnung A5 von 53 % zu verwenden. Edelstahl bedeutet jedoch sehr hohe Materialkosten bei niedrigen Grundfestigkeiten. Darüberhinaus sind auch bei Edelstahl Festigkeitserhöhungen nur durch höhere Umformgrade zu erreichen, die jedoch bei Komponenten des Fahrzeugbaus nicht immer realisierbar sind.

Weitere Stahlzusammensetzungen für unterschiedliche Anwendungsfälle sind schließlich noch aus der EP 1 143 022 A1, der EP 1 041 167 A1 und aus der EP 1 052 301 A1 bekannt.

Der Erfindung liegt - ausgehend vom Stand der Technik - die Aufgabe zugrunde, die Verwendungsbreite des bekannten Stahlwerkstoffs einerseits für den Stahlleichtbau so zu erweitern, dass dünnwandige Formteile bzw.

Schweißteile mit einer sowohl hohen Festigkeit als auch hohen Dauerfestigkeit gefertigt werden können, und dass andererseits Druckgasbehälter, insbesondere Druckgasflaschen, mit geringem Materialaufwand sowie einfacher und wirtschaftlicher hergestellt werden können, ohne dass eine Wärmebehandlung nach dem Fertigungsprozess und nach dem Schweißen erforderlich ist.

Diese Aufgabe wird mit den im Patentanspruch 1 angegebenen Merkmalen gelöst.

Die Verwendung eines dort charakterisierten Stahls hat zunächst im Hinblick auf die Herstellung von Druckbehältern den Vorteil, dass die endgültige Wärmebehandlung am Halbzeug Rohr im Durchlauf erfolgen und das Anlassen entfallen kann. Man erhält ein sauberes rußfreies Rohr. Der Herstellungsaufwand wird dadurch gesenkt.

Durch den Wegfall des teuren Legierungselements Nickel und Verringerung des Chromgehalts besteht ein weiterer Vorteil darin, dass der Stahl wesentlich preisgünstiger zur Verfügung gestellt werden kann.

Die erfindungsgemäße Stahllegierung ist für schnelle Schweißverfahren, wie MAG oder Laserstrahlschweißen gut geeignet und trägt damit in einem erheblichen Umfang zur Kostensenkung bei der Herstellung von Druckgasbehältern bei.

Schweißversuche mit der Schweißart MAGM haben ergeben, dass im Bereich der Schweißnaht eine geringere Härte vorliegt und dass eine Aufhärtung im Übergang zum Grundwerkstoff sowie der Wärmeeinflusszone stattfindet. Die überaus günstige Härtesteigerung in der Wärmeeinflusszone ist auf die hierin stattfindende Ausscheidungshärtung zurückzuführen. Durch die Ausscheidungshärte reißen die Rohre bei dem Zugversuch im Grundwerkstoff und nicht im Bereich der Schweißnaht. Die Schweißnaht hat zwar eine geringere Härte, diese Eigenart wird jedoch durch den größeren Querschnitt ausgeglichen. Es besteht keine Gefahr zur Rissbildung. Nach dem Schweißen ist keine weitere Wärmebehandlung (Spannungsarmglühen) erforderlich.

Mit dem erfindungsgemäßen Stahl können Zugfestigkeiten Rm ≥ 950 N/mm² und Streckgrenzen Rp 0,2 ≥ 700 N/mm² bei einer Bruchdehnung A5 ≥ 14 % eingestellt werden.

Interne Versuche haben gezeigt, dass der erfindungsgemäße Stahl die geforderte Kerbschlagzähigkeit nach ISO V bei -40 °C ≥ 35 Joule/cm² besitzt.

Bedingt durch die Erreichung der hohen und gleichmäßigen Festigkeits- und Streckgrenzwerte sowie Kerbschlagzähigkeit allein durch Lufthärtung der Rohre, ergibt sich im Rahmen der Erfindung der relevante Vorteil, dass die hierdurch erzielte Kosteneinsparung dann eine besondere Bedeutung erlangt, wenn die Druckgasbehälter als Massenprodukte, z.B. als Reaktionsbehälter für Airbag-Systeme, als Feuerlöschbehälter oder Druckgasflaschen in Getränkezubereitungsautomaten hergestellt werden.

Bei der Fertigung eines Druckgasbehälters aus einem nahtlosen Präzisionsstahlrohr mit einer Analyse gemäß der Erfindung wird das warmgewalzte nahtlose Ausgangsrohr zunächst weichgeglüht und dann gebeizt, phosphatiert und beseift. Nach dem anschließenden Ziehen erfolgt eine Lufthärtung bei 950 °C ± 15 °C im Durchlaufofen unter Schutzgas. Danach wird das Präzisionsstahlrohr gerichtet und einer Prüfung, insbesondere einer Ultraschall- und/oder Wirbelstromprüfung, unterzogen.

Nach dem darauffolgenden Ablängen wird aus jedem abgelängten Rohrabschnitt durch Umformen zunächst der Boden und der Hals eines Druckbehälters erzeugt. Danach schließt sich die Fertigstellung des Druckgasbehälters an.

Bei einer weiteren Variante der Fertigung wird jeder Druckgasbehälter durch Einschweißen eines Bodens erzeugt.

Statt eines nahtlosen Ausgangsrohrs kann auch ein längsnahtgeschweißtes Ausgangsrohr eingesetzt werden.

Die erfindungsgemäße Verwendung ist ferner vorteilhaft für Formbauteile im Stahlleichtbau, insbesondere für crashrelevante Fahrzeugteile, wie Crashboxen, Überrollbügel, Seitenaufprallelemente oder Säulenverstärkungen, bei denen neben einer bestimmten Festigkeit auch eine gewisse Nachgiebigkeit (plastische Verformungsreserve) gefordert wird, um Crashenergie unwandeln zu können. Höchstfeste Stähle haben den Nachteil, dass sie sich nur begrenzt zum Bauteil umformen lassen und sie sich im Crashfall nur relativ wenig plastisch deformieren.

Eine zweckmäßige Ausgestaltung des erfindungsgemäßen Grundgedankens in bezug auf die Herstellung von Druckgasbehältem besteht in den Merkmalen des Patentanspruchs 2, insbesondere wenn die Wanddicken der Druckgasbehälter mindestens 2 mm betragen.

Auch wenn es aus der praktischen Anwendung heraus ein Ziel ist, den NickelAnteil in der Stahllegierung für den Stahlleichtbau zu vermeiden bzw. zu minimieren, kann die verwendete Stahllegierung grundsätzlich geringe Nickel-Anteile bis maximal 0,20 % enthalten. Dieser Anteil resultiert aus dem Einsatz von Stahlschrott bei der Erschmelzung der Stahllegierung. Gleiches gilt für Kupfer, welches infolge des Schrotteinsatzes auftritt, jedoch auf maximal 0,20 Gew.% begrenzt werden soll.

Wenn die Wanddicken der Druckgasbehälter unter 2 mm liegen, kommen bevorzugt die Merkmale des Patentanspruchs 3 zur Anwendung.

Weitere vorteilhafte Verwendungen zur Herstellung von Formbauteilen im Stahlleichtbau werden in den Merkmalen der Patentansprüche 4 und 5 gesehen.

Generell führt die gezielte Abstimmung der Legierungselemente der Stahllegierung zu gezielten Eigenschaften, wie
a) Spitzeneinstellung bei dynamischer Festigkeit aufgrund stabiler bainitischer Grundstruktur im luftharten und luftvergüteten Zustand,
b) höchste statische Festigkeit bei gleichzeitig guter Dehnung,
c) Anlassbeständigkeit für festigkeitsstabile Wärmeeinflusszonen bei Schweißverbindungen.

Eine besonders interessante Weiterbildung besteht jedoch in den Merkmalen des Patentanspruchs 6.

Ein Kernpunkt ist der, dass jetzt auch eine Hochtemperaturverzinkung bei ca. 600 °C keinen negativen Einfluss auf die Festigkeit des erfindungsgemäß verwendeten luftvergüteten oder luftharten Stahlwerkstoffs zur Herstellung von Formbauteilen im Stahlleichtbau hat. Der Einfluss der Hochtemperatur-Verzinkung ist im Gegenteil bei luftharten Teilen positiv, da durch die Temperaturführung diese in den Zustand luftvergütet überführt werden, welcher sich durch höhere Dauerfestigkeit auszeichnet. Ferner kann durch die angewandte Hochtemperatur-Verzinkung jedes Formbauteil mit einer nur geringen Schichtdicke Zink von etwa 20 µm versehen werden, um bei einem ausreichenden Langzeitkorrosionsschutz dennoch mit geringen Zinkgewichten auszukommen. Demzufolge ist die Erfindung für Leichtbauzwecke, wie sie mit Formbauteilen, insbesondere im Fahrzeugbau, verstärkt angestrebt werden, besonders interessant.

Die Verwendung des Stahlwerkstoffs zur Herstellung von, insbesondere dünnwandigen, Formbauteilen im Stahlleichtbau führt zu einer höheren Grundfestigkeit bei akzeptabler Dehnung. Die Aushärtung in den Wärmeeinflusszonen sichert auch eine einwandfreie Festigkeit der Schweißverbindungen. Ein geringes Zinkgewicht ist durch geringe Schichtdicken bei ausreichendem Korrosionsschutz durch die Hochtemperaturverzinkung gewährleistet.

Insbesondere ist diese erfindungsgemäße Variante vorteilhaft für die Herstellung von Formbauteilen im Stahlleichtbau, hier gerade im Fahrzeugbau, vorzugsweise für Fahrwerksteile wie Lenker oder Achsträger. Bei solchen Teilen stehen die Kriterien Leichtbau und Korrosionsschutz unter extremen Bedingungen sowie Dauerfestigkeit unter dynamischer Beanspruchung im Vordergrund. Alternative, möglicherweise gleichwertige Lösungen in Aluminium sind in diesem Zusammenhang gegenüber der erfindungsgemäß vorgeschlagenen Lösung mit erheblichen Mehrkosten verbunden.

## Patentansprüche

1. Verwendung einer Stahllegierung, die in Masseanteilen aus
| | |
|---|---|
| 0,09 - 0,13 % | Kohlenstoff, |
| 0,10 - 0,50 % | Silizium, |
| 1,10 - 1,80 % | Mangan, |
| max. 0,02 % | Phosphor, |
| max. 0,02 % | Schwefel, |
| 1,00 - 2,00 % | Chrom, |
| 0,20 - 0,60 % | Molybdän, |
| 0,02 - 0,06 % | Aluminium, |
| 0,10 - 0,25 % | Vanadium, |
| sowie | |
| max 0.2 % | Kupfer |
| max. 0.7 % | Nickel |
und Eisen sowie den üblichen Verunreinigungen als Rest besteht, als Werkstoff für unter Schutzgas luftgehärtete Rohre zur Herstellung von Druckgasbehältern oder als Werkstoff zur Herstellung von Formbauteilen im Stahlleichtbau.

2. Verwendung einer Stahllegierung nach Patentanspruch 1 als Werkstoff für unter Schutzgas luftgehärtete Rohre zur Herstellung von Druckgasbehältern, wobei die Stahllegierung in Massenanteilen aus
| | |
|---|---|
| 0,09 - 0,12 % | Kohlenstoff, |
| 0,15 - 0,30 % | Silizium, |
| 1,45 - 1,60 % | Mangan, |
| max. 0,015 % | Phosphor, |
| max. 0,011 % | Schwefel, |
| 1,25 - 1,50 % | Chrom, |
| 0,40 - 0,60 % | Molybdän, |
| 0,02 - 0,06 % | Aluminium, |
| 0,12 - 0,20 % | Vanadium, |
| sowie | |
| max. 0,20 % | Kupfer, |
| max. 0,70 % | Nickel |
und Eisen sowie den üblichen Verunreinigungen als Rest besteht.

3. Verwendung einer Stahllegierung nach Patentanspruch 2 mit einem Anteil Nickel von max. 0,2%.

4. Verwendung einer Stahllegierung nach Patentanspruch 1 als Werkstoff zur Herstellung von Formbauteilen im Stahlleichtbau, die im luftvergüteten Zustand eine Zugfestigkeit von Rm von >850 N/mm², eine Streckgrenze Rp0,2 von >700 N/mm² und eine Dehnung A5 von >15 % aufweisen, wobei die Stahllegierung in Masseanteilen aus
| | |
|---|---|
| 0,09 - 0,13 | % Kohlenstoff, |
| 0,15 - 0,30 | % Silizium, |
| 1,10 - 1,60 | % Mangan, |
| max. 0,015 | % Phosphor, |
| max. 0,011 | % Schwefel, |
| 1,00 - 1,60 | % Chrom, |
| 0,30 - 0,60 | % Molybdän, |
| 0,02 - 0,05 | % Aluminium, |
| 0,12 - 0,25 | % Vanadium |
Rest Eisen und erschmelzungsbedingten Verunreinigungen besteht.

5. Verwendung eines Stahlwerkstoffs nach Patentanspruch 4 als Werkstoff zur Herstellung von Formbauteilen im Stahlleichtbau, die im luftharten Zustand eine Zugfestigkeit Rm von >950 N/mm², eine Streckgrenze Rp0,2 von >700 N/mm² und eine Dehnung A5 von >14 % aufweisen.

6. Verwendung eines Stahlwerkstoffs nach Patentanspruch 1 für den Zweck nach Patentanspruch 4 oder 5, mit der Maßgabe, dass die Formbauteile hochtemperaturverzinkt sind.

## Claims

1. Use of a steel alloy which consists of, in percent by mass,
| | |
|---|---|
| 0.09-0.13% | Carbon |
| 0.10-0.50% | Silicon |
| 1.10-1.80% | Manganese |
| max. 0.02% | Phosphorus |
| max. 0.02% | Sulphur |
| 1.00-2.00% | Chromium |
| 0.20-0.60% | Molybdenum |
| 0.02-0.06% | Aluminium |
| 0.10-0.25% | Vanadium |
| and | |
| max. 0.2% | Copper |
| max. 0.7% | Nickel |
and iron as well as standard impurities as the remainder, as a material for pipes which are air-hardened under protective gas and are used to produce compressed-gas cylinders or as a material for the production of shaped components used in light-gauge steel construction.

2. Use of a steel alloy according to Patent Claim 1 as a material for pipes which are air-hardened under protective gas and are used to produce compressed-gas cylinders, the steel alloy consisting of, in percent by mass,
| | |
|---|---|
| 0.09-0.12% | Carbon |
| 0.15-0.30% | Silicon |
| 1.45-1.60% | Manganese |
| max. 0.015% | Phosphorus |
| max. 0.011% | Sulphur |
| 1.25-1.50% | Chromium |
| 0.40-0.60% | Molybdenum |
| 0.02-0.06% | Aluminium |
| 0.12-0.20% | Vanadium |
| and | |
| max. 0.20% | Copper |
| max. 0.70% | Nickel |
and iron as well as the standard impurities as the remainder.

3. Use of a steel alloy according to Patent Claim 2 with a nickel content of at most 0.2%.

4. Use of a steel alloy according to Patent Claim 1 as material for the production of shaped components used in light-gauge steel construction, which in the air-quenched state have a tensile strength of Rm >850 N/mm², a yield strength Rp0.2 of >700 N/mm² and an elongation A5 of >15%, the steel alloy consisting of, in percent by mass,
| | |
|---|---|
| 0.09-0.13% | Carbon |
| 0.15-0.30% | Silicon |
| 1.10-1.60% | Manganese |
| max. 0.015% | Phosphorus |
| max. 0.011% | Sulphur |
| 1.00-1.60% | Chromium |
| 0.30-0.60% | Molybdenum |
| 0.02-0.05% | Aluminium |
| 0.12-0.25% | Vanadium |
remainder iron and melting-related impurities.

5. Use of a steel material according to Patent Claim 4 as a material for producing shaped components in light-gauge steel construction, which in the air-hardened state have a tensile strength Rm of >950 N/mm², a yield strength Rp0.2 of >700 N/mm² and an elongation A5 of >14%.

6. Use of a steel material according to Patent Claim 1 for the purpose described in Patent Claim 4 or 5, with the proviso that the shaped components are high-temperature galvanized.

## Revendications

1. Utilisation d'un alliage d'acier, qui est constitué en parts en poids de
0,09 à 0,13%de carbone,
0,10 à 0,50%de silicium,
1,10 à 1,80%de manganèse,
max. 0,02% de phosphore,
max. 0,02% de soufre,
1,00 à 2,00%de chrome,
0,20 à 0,60%de molybdène,
0,02 à 0,06%d'aluminium,
0,10 à 0,25%de vanadium,
ainsi que
max. 0,2% de cuivre,
max. 0,7% de nickel
et le reste de fer ainsi que des impuretés habituelles, comme matériau pour tuyaux trempés à l'air sous gaz de protection destiné à la fabrication de réservoirs de gaz comprimé ou comme matériau destiné à la fabrication d'éléments moulés dans le domaine de la construction d'acier légère.

2. Utilisation d'un alliage d'acier selon la revendication 1 comme matériau pour tuyaux trempés à l'air sous gaz de protection, destiné à la fabrication de réservoirs de gaz comprimé, l'alliage d'acier étant constitué en parts en poids de
0,09 à 0,12%de carbone,
0,15 à 0,30%de silicium,
1,45 à 1,60%de manganèse,
max. 0,015%de phosphore,
max. 0,011 %de soufre,
1,25 à 1,50%de chrome,
0,40 à 0,60%de molybdène,
0,02 à 0,06%d'aluminium,
0,12 à 0,20%de vanadium,
ainsi que
max. 0,20% de cuivre,
max. 0,70% de nickel
et le reste de fer ainsi que des impuretés habituelles.

3. Utilisation d'un alliage d'acier selon la revendication 2 avec une part de nickel d'au max.0,2%.

4. Utilisation d'un alliage d'acier selon la revendication 1 comme matériau destiné à fabriquer d'éléments moulés dans le domaine de la construction d'acier légère, qui présentent à l'état trempé à l'air et revenu une résistance à la traction de Rm > 850 N/mm², une limite d'élasticité Rp0,2 >700 N/mm² et une dilatation A5 >15%, l'alliage d'acier étant constitué en parts en poids de
0,09 à 0,13%de carbone,
0,15 à 0,30%de silicium,
1,10 à 1,60%de manganèse,
max. 0,015%de phosphore,
max. 0,011 %de soufre,
1,00 à 1,60%de chrome,
0,30 à 0,60%de molybdène,
0,02 à 0,05%d'aluminium,
0,12 à 0,25%de vanadium,
le reste de fer et d'impuretés provoquées par la fusion de l'acier.

5. Utilisation d'un matériau en acier selon la revendication 4 comme matériau destiné à la fabrication d'éléments moulés dans le domaine de la construction d'acier légère, qui présentent à l'état trempé à l'air une résistance à la traction Rm >950 N/mm², une limite d'élasticité Rp0,2 >700 N/mm² et une dilatation A5 >14%.

6. Utilisation d'un matériau en acier selon la revendication 1 pour la fin selon la revendication 4 ou 5, au fur et à mesure que les éléments moulés sont galvanisés à haute température.
